# EUROPÄISCHE PATENTSCHRIFT

(11) **EP 3 490 871 B1**
(45) Veröffentlichungstag und Bekanntmachung des Hinweises auf die Patenterteilung: **17.06.2020**
(21) Anmeldenummer: 17716843.2
(22) Anmeldetag: 07.04.2017
(51) Int. Cl.: B62B 3/00, B62B 5/00

(54) **ROLLWAGEN MIT VORHANGEINRICHTUNG**
ROLLING CART WITH CURTAIN DEVICE
CHARIOT AVEC DISPOSITIF À RIDEAU

(30) Priorität: 29.07.2016 DE 202016104192 U
(43) Veröffentlichungstag der Anmeldung: 05.06.2019
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2017/058356
(87) Internationale Veröffentlichungsnummer: WO 2018/019437

(56) Entgegenhaltungen:
- DE-U1-202012 101 216
- DE-U1-202015 100 289
- DE-U1-202015 101 362
- US-A- 2 455 237

## Beschreibung

Die Erfindung betrifft die Kombination aus einem Rollwagen, insbesondere Rollcontainer, und einer Vorhangeinrichtung zur wahlweisen Abdeckung einer Zugangsöffnung zwischen zwei benachbarten Seitenpfosten eines Rollwagengestells, mit einem Flächenelement sowie mit Verbindungsmitteln zur lösbaren Festlegung des Flächenelementes an den Seitenpfosten, wobei die Verbindungsmittel als an das Flächenelement angeschlossene Spannriemen ausgebildet sind, welche sich jeweils zwischen den beiden Seitenpfosten erstrecken.

Rollwagen werden typischerweise zum Transport von Waren innerhalb von Gebäuden, zum Transport der Waren vom Gebäude in beispielsweise einen LKW und vom LKW erneut in ein anderes Gebäude genutzt. Insofern handelt es sich bei Rollwagen um das zentrale Transportmittel in der Logistik. Bei den Waren kann es sich um Pakete aber auch offene Produkte, Lebensmittel, Maschinenteile etc. handeln. Zu diesem Zweck verfügt der betreffende Rollwagen in der Regel über eine Basis und das mit der Basis verbundene Rollwagengestell. Die Basis ruht ihrerseits auf mehreren Laufrollen. Bei den Laufrollen kann es sich um feststehende Bockrollen oder auch Lenkrollen handeln. Die Basis trägt das Rollwagengestell, welches sich aus mehreren Seitenwänden mit den jeweiligen Seitenpfosten zusammensetzt.

Die jeweiligen Seitenwände stehen überwiegend senkrecht auf der Basis auf. Die Seitenwände können selbst geschlossen ausgebildet sein und in diesem Zusammenhang als Seitenplatten ausgeführt werden. Es sind aber auch offene und als Gitterwände ausgelegte Seitenwände möglich. In der Regel ist eine Zugangsöffnung bei dem betreffenden Rollwagen respektive Rollcontainer realisiert, über den die mit Hilfe des Rollwagens transportierten Waren eingeladen und abgeladen werden. Es ist aber auch möglich, zwei Zugangsöffnungen vorzusehen.

Beim gattungsbildenden Stand der Technik nach der DE 20 2015 101 362 U1 wird mit einem Rollwagen gearbeitet, welcher insgesamt über eine kastenförmige Ausgestaltung verfügt. Zum Verschließen einer offenen Seite ist eine Schürze vorgesehen. Die Schürze weist frontseitig Riemen auf, die endseitig mit Haken ausgerüstet sind. Die Haken werden dabei in Ösen des Rollwagens eingehakt. Auf diese Weise kann die Schürze auch auf Rollwagen anderer Abmessungen verwendet werden.

Im weiteren Stand der Technik nach der DE 20 2014 102 603 U1 wird ein Rollcontainer zur Aufnahme einer Mehrzahl von Trägerelementen für Lebensmittel und insbesondere Teigwaren beschrieben. Der bekannte Rollcontainer verfügt über ein Rollwagengestell, welches aus Plattenelementen aufgebaut ist. Eine Zugangsseite bzw. eine Zugangsöffnung des Rollcontainers ist durch ein flexibles Vorhangelement abgehängt bzw. lösbar verschlossen.

Das Vorhangelement besteht aus einem Verbundmaterial, welches mindestens eine zwischen zwei Außenfolien eingebettete Innenfolie aufweist. Dadurch ist das Vorhangelement insgesamt wärmeisolierend ausgelegt. Zur Festlegung des Vorhangelementes ist eine oberseitige Fixierschiene vorgesehen. Außerdem wird das Vorhangelement zusätzlich zu dieser Fixierschiene mit Schrauben an den Seitenpfosten gehalten.

Der bekannte Rollcontainer entsprechend der DE 20 2014 102 603 U1 hat sich grundsätzlich bewährt. Allerdings ist die Anbringung und Entfernung der bekannten Vorhangeinrichtung aufwendig. Das gilt nicht nur wegen der anzubringenden und zu lösenden Schrauben, sondern auch und insbesondere vor dem Hintergrund, dass zusätzlich die Vorhangfixierschiene festgelegt bzw. entfernt werden muss.

Die US 2 455 237 befasst sich schließlich mit einer Vorhangeinrichtung, die ein Flächenelement aus einem Gewebe aufweist. Außerdem sind zugehörige Spanngurte realisiert.

Der Erfindung liegt das technische Problem zugrunde, eine derartige Kombination aus einem Rollwagen und einer Vorhangeinrichtung so weiter zu entwickeln, dass die Anbringung und das Entfernen der Vorhangeinrichtung gegenüber dem Stand der Technik verbessert sind und insbesondere schnell und komfortabel vorgenommen werden kann.

Zu Lösung dieser technischen Problemstellung schlägt die Erfindung bei einer gattungsgemäßen Kombination vor, dass der jeweilige Spannriemen zweiteilig mit einem längenflexiblen Spanngurt mit zwei jeweils endseitigen Klammern und einem im Wesentlichen längenstabilen Spanngurt mit einer Spannklemme ausgebildet ist.

Mit Hilfe der Klammern umgreift oder übergreift der betreffende Spannriemen den zugehörigen Seitenpfosten. Um in diesem Zusammenhang die lösbare Anbringung der betreffenden Klammer an dem zugehörigen Seitenpfosten zu erleichtern, sind die Klammern vorteilhaft mit angeschlossenen Handhaben ausgerüstet. Bei diesen Handhaben kann es sich um mit den Klammern verbundene Gurtfahnen handeln. Diese Gurtfahnen lassen sich besonders einfach ergreifen und führen, so dass von einer Bedienperson nicht die Klammer selbst am Seitenpfosten lösbar festgelegt werden muss, sondern hierzu vielmehr die mit der jeweiligen Klammer verbundene Gurtfahne genutzt wird.

Der jeweilige Spannriemen wird im Regelfall zumindest teilweise in einem an das Flächenelement angeschlossenen Schlauch geführt und gehalten. Zu diesem Zweck ist der jeweilige Schlauch meistens im Bereich der beiden endseitigen Klammern des Spannriemens und zusätzlich mittig unter Bildung eines Freibereiches geöffnet und ansonsten geschlossen ausgebildet. Durch den mittigen Freibereich werden insgesamt zwei Teilschläuche definiert.

Von besonderer Bedeutung für die Erfindung ist der Umstand, dass der Spannriemen insgesamt zweiteilig mit dem längenflexiblen Spanngurt mit den beiden endseitigen Klammern und dem im Wesentlichen längenstabilen Spanngurt mit der Spannklemme ausgebildet ist. Während sich der längenflexible Spanngurt mit seinen beiden endseitigen Klammern durchgängig zwischen den beiden benachbarten Seitenpfosten erstreckt, ist der längenstabile Spanngurt demgegenüber kürzer ausgelegt. Tatsächlich ist der betreffende Spanngurt so ausgelegt, dass er mit seinen beiden Enden an jeweils Schlauchenden beidseitig des mittigen Freibereiches des Schlauches anliegt und/oder an diese Schlauchenden angeschlossen ist. D.h., der Spanngurt mit der zugehörigen Spannklemme überspannt letztendlich lediglich den Freibereich. Der Freibereich erstreckt sich zwischen den beiden sich gegenüberliegenden Schlauchenden der beiden Teilschläuche. Da der Spanngurt an den zugehörigen Schlauchenden beidseitig des mittigen Freibereiches des Schlauches anliegt respektive an diese Schlauchenden angeschlossen ist, wird der längenstabile Spanngurt mit seiner Spannklemme positionsstabil innerhalb des Freibereiches gehalten.

Der längenflexible und durchgängige Spanngurt ist mit dem jeweiligen Teilschlauch verbunden bzw. reibschlüssig gekoppelt. Dadurch folgt der betreffende Teilschlauch im Wesentlichen der Bewegung des längenflexiblen Spanngurtes. Die Verbindung des längenflexiblen Spanngurtes mit dem jeweiligen Teilschlauch wird in der Regel derart erreicht, dass der Schlauch und das Flächenelement miteinander verbunden sind. Bei dieser Verbindung wird der fragliche längenflexible Spanngurt gleichsam mit dem zugehörigen Teilschlauch zumindest teilweise gekoppelt, zumindest reibschlüssig.

Um die Handhabung der erfindungsgemäßen Vorhangeinrichtung zu erleichtern, hat es sich bewährt, wenn das Flächenelement ein Flächengewicht von weniger als 500 g/m² aufweist. Typischerweise werden hier sogar Flächengewichte von ca. 400 g/m² und sogar noch weniger beobachtet. Als Folge dieses geringen Flächengewichtes ist mit einer einfachen Handhabung der Vorhangeinrichtung zu rechnen. Außerdem kann auf diese Weise sichergestellt werden, dass das Flächenelement zumindest teilweise transparent ausgelegt ist. Dadurch lässt das Flächenelement und folglich die Vorhangeinrichtung insgesamt einen zumindest teilweise ungehinderten Blick einer Bedienperson auf die im Innern des Rollwagens befindlichen Waren zu.

Das Flächenelement ist im Regelfall als textiles Flächengebilde und insbesondere als Netz ausgebildet. Hierbei können generell Vliesstoffe, Gestricke, Gewebe und/oder Gewirke als Basis genutzt werden. Außerdem ist die Auslegung meistens so getroffen, dass die zur Realisierung des textilen Flächengebildes bzw. Netzes vorgesehenen Fäden und folglich das Flächenelement insgesamt ein oder beidseitig beschichtet ist. Für die Beschichtung wird im Allgemeinen auf eine Kunststoffbeschichtung zurückgegriffen. Dadurch lässt sich das Flächenelement besonders einfach verarbeiten und mit den Schläuchen verbinden.

Tatsächlich kommt als Schlauch nämlich üblicherweise ein Kunststoffschlauch zum Einsatz. Der Kunststoffschlauch und das Flächenelement können zu ihrer Verbindung miteinander verschweißt werden. Hierbei wird auf übliche Kunststoffschweißvorgänge zurückgegriffen. Außerdem besteht hierdurch die Möglichkeit, das Flächenelement bzw. das an dieser Stelle realisierte Netz und insbesondere ein beschichtetes Gewebe mit Verstärkungselementen auszurüsten. Bei diesen Verstärkungselementen handelt es sich vorteilhaft um aufgeschweißte Streifen aus Kunststoff bzw. einer Kunststoffplane. Dadurch wird das ansonsten biegeschlaffe Flächenelement bzw. Netz nicht nur verstärkt, sondern erhält durch die Verstärkungselemente zugleich eine Flächenstruktur und lässt sich dadurch einfach am Rollwagen anbringen. Bei dem Flächenelement bzw. Netz handelt es sich im Regelfall um ein solches, welches aus einem Gewebe aus Kunststofffäden aufgebaut ist. Die Kunststofffäden sind ihrerseits mit Kunststoff beschichtet oder werden direkt verarbeitet. Dabei kann jeweils auf einen bekannten Kunststoffschweißvorgang zurückgegriffen werden.

Im Ergebnis wird eine Vorhangeinrichtung für Rollwagen im Rahmen der Erfindung beschrieben, die sich zunächst einmal besonders einfach handhaben lässt. Hierzu trägt ganz wesentlich das geringe Flächengewicht des Flächenelementes von weniger als 500 g/m² bei. Außerdem verzichtet die erfindungsgemäße Vorhangeinrichtung ausdrücklich auf Stangen, so dass sich die Vorhangeinrichtung bei Nichtgebrauch klein und kompakt zusammenfalten lässt.

Die Anbringung am Rollwagen zur Abdeckung der Zugangsöffnung gelingt ebenfalls besonders einfach und komfortabel. Zunächst einmal sorgen die Verstärkungselemente in Verbindung mit den Schläuchen dafür, dass das Flächenelement aus dem biegeschlaffen Netz die gewünschte Flächenstruktur aufweist und sich hierdurch einfach an den Seitenpfosten festlegen lässt. Das geschieht lösbar über jeweils Klammern, mit deren Hilfe die fraglichen Seitenpfosten umgriffen oder übergriffen werden.

Durch den Rückgriff auf den an das Flächenelement angeschlossenen Spannriemen können problemlos unterschiedlich große Zugangsöffnungen mit Hilfe der erfindungsgemäßen Vorhangeinrichtung wahlweise verschlossen werden. Tatsächlich setzt sich der Spannriemen aus einerseits dem längenflexiblen Spanngurt und andererseits dem längenstabilen Spanngurt mit der Spannklemme jeweils zusammen. Dadurch kann die Vorhangeinrichtung bzw. das Flächenelement zunächst grob mit Hilfe der jeweils längenflexiblen Spanngurte an den sich gegenüberliegenden Seitenpfosten festgelegt werden. Eine Feinjustage und der etwaige Ausgleich eines Durchhangs des Flächenelementes ist dann mit Hilfe der zugehörigen längenstabilen Spannriemen unschwer möglich. Hierbei werden letztlich die beiden Teilschläuche angenähert und das Flächenelement insgesamt gespannt. Die Bedienung erfolgt dabei vorteilhaft mit Hilfe von Gurtfahnen, die an die Klammern angeschlossen sind. Außerdem ist die jeweilige Spannklemme als Bestandteil des Spanngurtes einfach zugänglich, weil der längenstabile Spanngurt den zwischen den beiden Teilschläuchen definierten Freibereich überbrückt.

Jedenfalls lässt sich die erfindungsgemäße Vorhangeinrichtung einfach, flexibel und schnell an die die abzudeckende Zugangsöffnung jeweils begrenzenden und beiden benachbarten Seitenpfosten lösbar anschließen. Als Folge hiervon sind die vom Rollwagen aufgenommenen und auf der zugehörigen Basis als Ladefläche aufliegenden Waren optimal im Innern des Rollwagens geschützt und können nicht über die Zugangsöffnung von der Basis rutschen. Sobald der Rollwagen an seinem Bestimmungsort angekommen ist, lässt er sich einfach entladen, weil hierzu die Vorhangeinrichtung lediglich von den Seitenpfosten gelöst werden muss. Umständliche Schraubverbindungen oder eine Arretierstange sind weder erforderlich noch notwendig. Dadurch wird insgesamt die Handhabung besonders einfach und komfortabel ermöglicht. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Vorhangeinrichtung in montiertem Zustand an einem Rollwagen,
- Fig. 2: die Vorhangeinrichtung separat mit Blick auf ihre Vorderseite und
- Fig. 3: die Vorhangeinrichtung nach der Fig. 2 mit Blick auf ihre Rückseite.

In den Figuren ist eine Vorhangeinrichtung für einen Rollwagen 1 dargestellt. Bei dem Rollwagen 1 handelt es sich beispielhaft um einen Rollcontainer. Der Rollwagen 1 verfügt über eine frontseitige Zugangsöffnung 2, über die Waren auf einer Basis 3 abgelegt werden. Auf der Basis 3 des Rollwagens 1 steht ein Rollwagengestell 4 auf, welches sich im Ausführungsbeispiel aus insgesamt drei Seitenwänden zusammensetzt, die im Querschnitt U-förmig angeordnet sind und frontseitig die Zugangsöffnung 2 definieren.

Die Basis 3 wird von Rollen 5 getragen. Im Ausführungsbeispiel sind insgesamt vier Rollen 5 realisiert. Die Rollen 5 können wahlweise als feststehende Bockrollen oder Lenkrollen ausgebildet sein. Es können auch nur Lenkrollen als Rollen 5 zum Einsatz kommen. Die Basis 3 fungiert insgesamt als Ladefläche für die mit Hilfe des Rollwagens 1 transportierten Waren. Die nachfolgend noch im Detail zu beschreibende Vorhangeinrichtung nach der Erfindung sorgt dafür, dass die Zugangsöffnung 2 lösbar verschlossen wird, so dass die auf der Basis 3 als Ladefläche befindlichen Waren sicher mit Hilfe des Rollwagens 1 transportiert werden können.

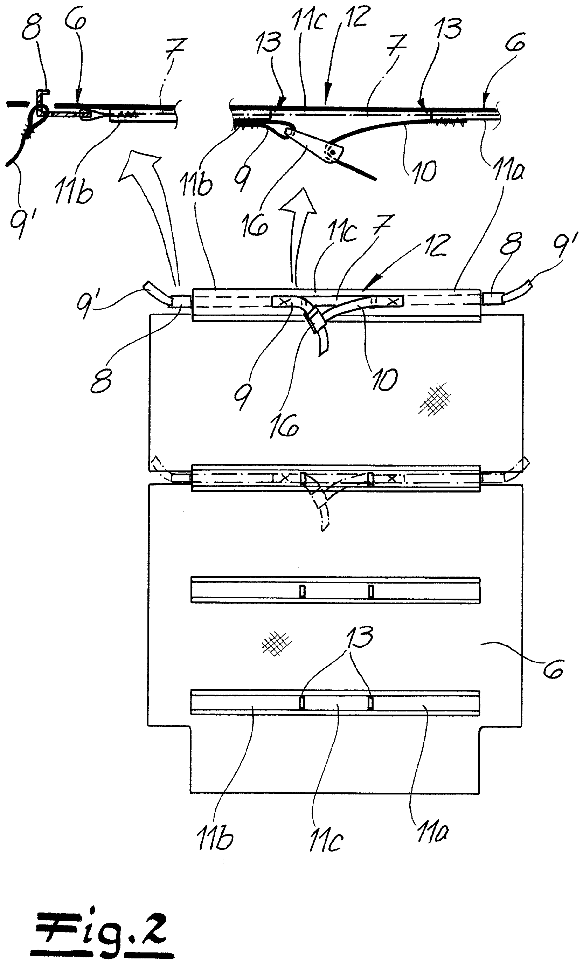

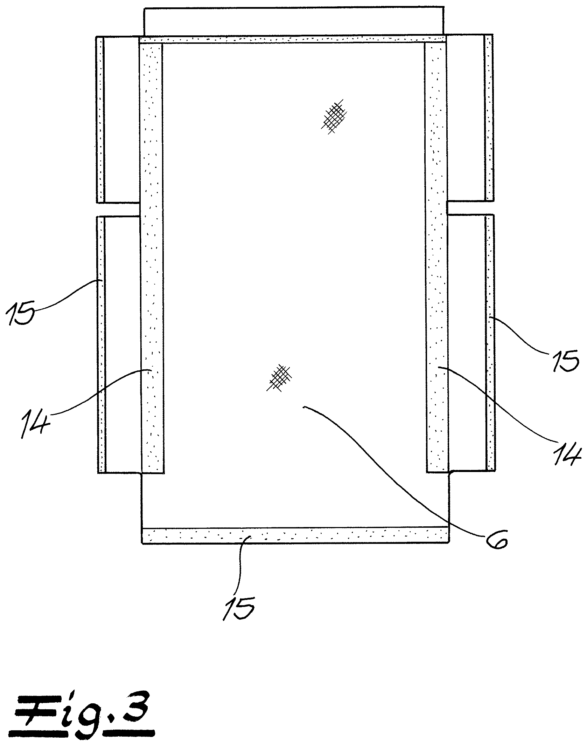

Anhand der Frontansicht nach der Fig. 2 und der Rückansicht gemäß der Fig. 3 erkennt man die Details der erfindungsgemäß realisierten Vorhangeinrichtung. Diese verfügt in ihrem grundsätzlichen Aufbau über ein Flächenelement 6 und Verbindungsmittel 7, 8, 9, 10, 16. Die Verbindungsmittel 7, 8, 9, 10, 16 dienen zur lösbaren Festlegung des Flächenelementes 6 an Seitenpfosten 4a des Rollwagengestells 4. Die beiden Seitenpfosten 4a stehen sich gegenüber und begrenzen zusammengenommen die mit Hilfe der Vorhangeinrichtung verschließbare Zugangsöffnung 2.

Die Verbindungsmittel 7, 8, 9, 10, 16 sind erfindungsgemäß als an das Flächenelement 6 angeschlossene Spannriemen 7, 8; 9, 10, 16 ausgebildet. Außerdem erstrecken sich die Spannriemen 7, 8; 9, 10, 16 zwischen den beiden Seitenpfosten 4a.

Man erkennt, dass der Spannriemen 7, 8; 9, 10, 16 im Ausführungsbeispiel zweiteilig ausgebildet ist. Tatsächlich setzt sich der jeweilige Spannriemen 7, 8; 9, 10, 16 aus einem längenflexiblen Spanngurt 7, 8 mit zwei jeweils endseitigen Klammern 8 einerseits und einem im Wesentlichen längenstabilen Spanngurt 9, 10, 16 mit einer Spannklemme 16 andererseits zusammen. Die beiden endseitig des jeweiligen Spannriemens 7, 8; 9, 10, 16 bzw. des längenflexiblen Spanngurtes 7, 8 vorgesehenen Klammern 8 sind im Ausführungsbeispiel und nicht einschränkend U-förmig im Querschnitt ausgebildet. Außerdem verfügen die jeweiligen Klammern 8 über eine angeschlossene Handhabe 9', bei welcher es sich um eine mit der betreffenden Klammer 8 verbundene Gurtfahne 9' handelt.

Die Gurtfahne 9' ist so ausgelegt, dass ein gewebter Kunststoffgurt durch einen in der Klammer 8 befindlichen Schlitz hindurchgeführt und die dadurch gebildete Schlaufe unter Bildung der Gurtfahne 9' mit dem überstehenden Ende vernäht wird. Dadurch kann ein Bediener die Klammer 8 und folglich den die beiden Klammern 8 miteinander verbindenden längenflexiblen Spanngurt 7 beaufschlagen, ohne direkt die betreffende Klammer 8 zu ergreifen. Vielmehr reicht es aus, wenn der Bediener mit seiner Hand an der betreffenden Gurtfahne 9' zieht, um so die Klammer 8 um den Seitenpfosten 4a herumzulegen bzw. die Klammer 8 lösbar am Seitenpfosten 4a festzulegen. Dadurch ist eine einfache und verletzungssichere Bedienung gewährleistet.

Der Spannriemen 7, 8; 9, 10, 16 insgesamt bzw. der längenflexible Spanngurt 7, 8 wird zumindest teilweise in einem an das Flächenelement 6 angeschlossenen Schlauch 11a, 11b geführt. Man erkennt, dass der Schlauch 11a, 11b im Bereich der beiden endseitigen Klammern 8 des Spannriemens 7, 8; 9, 10,16 bzw. des längenflexiblen Spanngurtes 7 ebenso geöffnet ist, wie in einem Freibereich 12. Ansonsten ist der betreffende Schlauch 11a, 11b geschlossen. Tatsächlich werden auf diese Weise zwei Teilschläuche 11a, 11b beidseitig des Freibereiches 12 gebildet.

Dabei ist die Auslegung insgesamt so getroffen, dass die beiden Teilschläuche 11a, 11b mit einer durchgängigen Unterseite 11c ausgerüstet sind, wohingegen die Oberseite des Schlauches lediglich im Bereich der beiden Teilschläuche 11a, 11b realisiert ist. Dadurch werden automatisch beidseitig des Freibereiches 12 Öffnungen 13 am Beginn des jeweiligen Teilschlauches 11a, 11b definiert. Durch diese Öffnungen 13 hindurch wird der längenflexible Spanngurt 7 geführt und liegt hierbei auf der durchgängigen Unterseite 11c auf und deckt diese teilweise ab.

Der längenstabile Spanngurt 9, 10 mit der Spannklemme 16 ist mit seinen beiden Enden an jeweils Schlauchenden beidseitig des mittigen Freibereiches 12 des Schlauches 11a, 11b angeschlossen bzw. liegt mit seinen beiden Enden jeweils am Schlauchende an. Dabei kann der genannte Spanngurt 9, 10 mit seinen beiden Enden im Bereich der Öffnungen 13 mit dem jeweiligen Teilschlauch 11a, 11b oder auch dem längenflexiblen Spanngurt 7, 8 verbunden sein. Das kann durch einen Nähvorgang oder auch über andere Verbindungstechniken geschehen. Auf diese Weise überspannt der längenstabile Spanngurt 9, 10 den Freibereich 12. Außerdem wird hierdurch die Spannklemme 16 in etwa mittig oder generell zugänglich im Freibereich 12 positioniert. Außerdem wird die etwa mittig des betreffenden Spanngurtes 9, 10 mit dem Spanngurt 9, 10 verbundene Spannklemme 16 folglich im Bereich 12 einfach zugänglich.

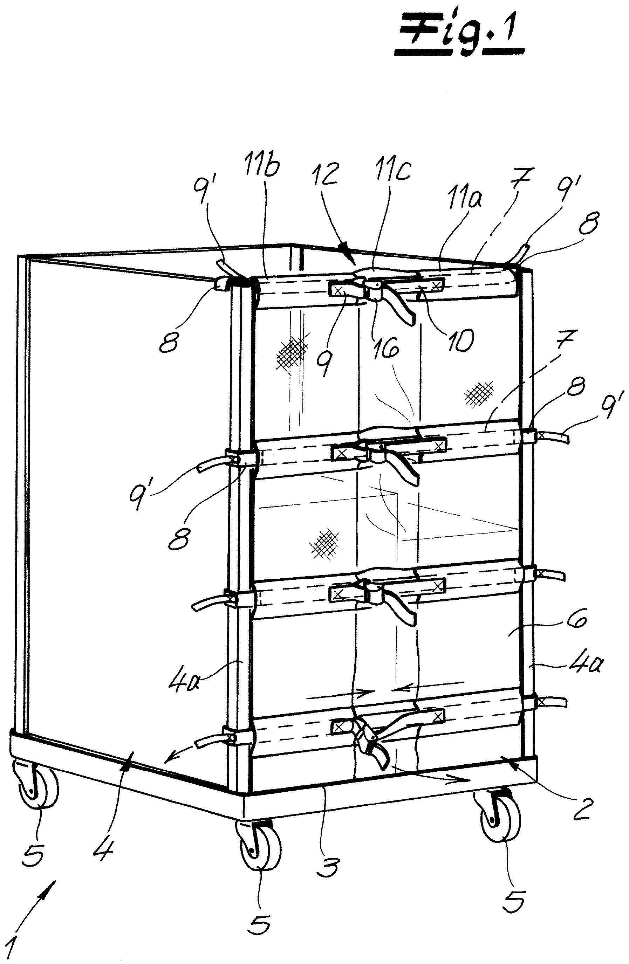

Das Flächenelement 6 ist als textiles Flächengebilde ausgelegt. Außerdem verfügt das Flächenelement 6 über ein Flächengewicht von weniger als 500 g/m². Ferner erkennt man insbesondere anhand der Darstellung nach der Fig. 1, dass das Flächenelement 6 und folglich die gesamte Vorhangeinrichtung zumindest teilweise transparent ist. Dadurch wird einem Bediener ein mehr oder minder ungehinderter Blick auf die im Innern des Rollwagens 1 befindlichen Waren ermöglicht. Anhand des Ausführungsbeispiels wird deutlich, dass das Flächenelement 6 als Netz bzw. insbesondere als Gewebe ausgebildet ist. Bei dem Gewebe handelt es sich um ein solches aus mit Kunststoff beschichteten Fäden.

Da darüber hinaus die jeweiligen Teilschläuche 11a, 11b als Kunststoffschläuche ausgelegt sind, lassen sich die Teilschläuche 11a, 11b und das beschichtete Gewebe bzw. das Flächengebilde 6 besonders einfach verbinden, nämlich durch einen Kunststoffschweißvorgang. D.h., der jeweilige Teilschlauch 11a, 11b und das Flächenelement 6 sind miteinander verschweißt. Durch diesen Schweißvorgang bzw. die Schweißverbindung des jeweiligen Teilschlauches 11a, 11b mit dem Flächenelement 6 wird zugleich der längenflexible Spanngurt 7 im Innern des betreffenden Teilschlauches 11a, 11b zumindest teilweise festgelegt. Das kann im einfachsten Fall durch einen Reibschluss zwischen dem längenflexiblen Spanngurt 7 einerseits und dem ihn aufnehmenden jeweiligen Teilschlauch 11a, 11b andererseits erfolgen.

Sobald also der fragliche längenflexible Spanngurt 7 gespannt wird, folgt auch der zugehörige Teilschlauch 11a, 11b dieser Spannbewegung und dementsprechend auch das Flächenelement 6. Ein etwaiger Durchhang des Flächenelementes 6 wird nun erfindungsgemäß dadurch ausgeglichen, dass nach der groben Anbringung der Vorhangeinrichtung mit Hilfe der jeweiligen längenflexiblen Spanngurte 7, 8 anschließend die zugehörigen Spanngurte 9, 10 gespannt werden. Das ist einfach möglich, weil die zugehörige Spannklemme 16 im Freibereich 12 zugänglich ist. Dadurch wird ein etwaiger Durchhang des Flächenelementes 6 im Freibereich 12 aufgenommen. Denn hierzu ist es lediglich erforderlich, die Spannklemme 16 des längenstabilen Spanngurtes 9, 10 zu lösen und zur Beseitigung des Durchhanges den Spanngurt 9, 10 entsprechend zu beaufschlagen, wie ein Pfeil in Fig. 1 andeutet.

Anhand der Ansichten in den Fig. 2 und 3 erkennt man, dass das Flächenelement 6 auf seiner Frontseite mit dem jeweiligen Kunststoffschlauch bzw. Teilschlauch 11a, 11b und den zugehörigen Spanngurten 7, 8; 9, 10 ausgerüstet ist. Demgegenüber weist die Rückseite des Flächenelementes 6 mehrere Verstärkungselemente 14 auf. Bei diesen Verstärkungselementen 14 kann es sich um Streifen aus Kunststoff bzw. einer Kunststoffplane handeln. Da das Flächenelement 6 aus einem mit Kunststoff beschichteten Gewebe hergestellt ist, lassen sich die fraglichen Streifen bzw. Verstärkungselemente 14 unschwer mit dem Flächenelement 6 ebenfalls durch Aufschweißen verbinden.

Durch die fraglichen Verstärkungselemente 14 erhält das ansonsten biegeschlaffe Flächenelement 6 die nötige Flächenstruktur. Hierzu tragen ergänzend die auf der Frontseite aufgeschweißten Teilschläuche 11a, 11b bei. Dadurch weist die erfindungsgemäße Vorhangeinrichtung zwar die nötige Flexibilität auf, lässt sich gleichwohl einfach zur Abdeckung der Zugangsöffnung 2 an den Seitenpfosten 4a anbringen. Dadurch, dass als Flächenelement 6 ein mit Kunststoff beschichtetes Gewebe zum Einsatz kommt, lassen sich die Kanten des Flächenelementes 6 einfach durch einen Umschlag 15 fixieren, wobei dieser Umschlag 15 mit der Rückseite des Flächenelementes 6 verschweißt ist. Ein zusätzliches Randvernähen ist folglich nicht erforderlich, so dass hierdurch mit geringen Herstellungskosten zu rechnen ist.

## Patentansprüche

1. Kombination aus einem Rollwagen (1), insbesondere Rollcontainer, und einer Vorhangeinrichtung zur wahlweisen Abdeckung einer Zugangsöffnung (2) zwischen zwei benachbarten Seitenpfosten (4a) eines Rollwagengestells (4), mit einem Flächenelement (6) sowie mit Verbindungsmitteln (7, 8; 9, 10, 16) zur lösbaren Festlegung des Flächenelementes (6) an den Seitenpfosten (4a), wobei die Verbindungsmittel (7, 8; 9, 10, 16) als an das Flächenelement (6) angeschlossene Spannriemen (7, 8; 9, 10, 16) ausgebildet sind, welche sich jeweils zwischen den beiden Seitenpfosten (4a) erstrecken,
**dadurch gekennzeichnet, dass**
der jeweilige Spannriemen (7, 8; 9, 10, 16) zweiteilig mit einem längenflexiblen Spanngurt (7, 8) mit zwei jeweils endseitigen Klammern (8) und einem im Wesentlichen längenstabilen Spanngurt (9, 10, 16) mit einer Spannklemme (16) ausgebildet ist.

2. Kombination nach Anspruch 1, **dadurch gekennzeichnet, dass** der jeweilige Spannriemen (7, 8; 9, 10, 16) mit zwei endseitigen Klammern (8) ausgerüstet ist.

3. Kombination nach Anspruch 2, **dadurch gekennzeichnet, dass** die Klammern (8) jeweils mit einer angeschlossenen Handhabe (9') ausgerüstet sind.

4. Kombination nach Anspruch 3, **dadurch gekennzeichnet, dass** es sich bei der Handhabe (9') um eine mit der betreffenden Klammer (8) verbundene Gurtfahne (9') handelt.

5. Kombination nach einem der Ansprüche 1 bis 4, **dadurch gekennzeichnet, dass** der jeweilige Spannriemen (7, 8; 9, 10, 16) zumindest teilweise in einem an das Flächenelement (6) angeschlossenen Schlauch (11a, 11b) geführt und gehalten wird.

6. Kombination nach Anspruch 5, **dadurch gekennzeichnet, dass** der jeweilige Schlauch (11a, 11b) im Bereich der beiden endseitigen Klammern (8) des Spannriemens (7, 8; 9, 10, 16) und mittig unter Bildung eines Freibereiches (12) geöffnet und ansonsten geschlossen ausgebildet ist und dadurch zwei Teilschläuche (11a, 11b) definiert.

7. Kombination nach Anspruch 6, **dadurch gekennzeichnet, dass** der längenstabile Spanngurt (9, 10, 16) mit seinen beiden Enden an jeweils Schlauchenden beidseitig des mittigen Freibereiches (12) des Schlauches (11a, 11b) anliegt und/oder an diese angeschlossen ist.

8. Kombination nach einem der Ansprüche 6 bis 7, **dadurch gekennzeichnet, dass** der längenstabile Spanngurt (9, 10) mit dem jeweiligen Teilschlauch (11a, 11b) verbunden ist und/oder einen Anschlag am betreffenden Teilschlauch (11a, 11b) definiert.

9. Kombination nach einem der Ansprüche 1 bis 8, **dadurch gekennzeichnet, dass** das Flächenelement (6) ein Flächengewicht von weniger als 500 g/m² aufweist.

10. Kombination nach einem der Ansprüche 1 bis 9, **dadurch gekennzeichnet, dass** das Flächenelement (6) zumindest teilweise transparent ausgebildet ist.

11. Kombination nach einem der Ansprüche 1 bis 10, **dadurch gekennzeichnet, dass** das Flächenelement (6) als Netz und insbesondere beschichtetes Gewebe ausgebildet ist.

12. Kombination nach einem der Ansprüche 1 bis 11, **dadurch gekennzeichnet, dass** das Flächenelement (6) mit Verstärkungselementen (14), beispielsweise aufgeschweißten Streifen aus Kunststoff, ausgebildet ist.

13. Kombination nach einem der Ansprüche 5 bis 12, wenn abhängig von Anspruch 5, **dadurch gekennzeichnet, dass** der Schlauch (11a, 11b) als Kunststoffschlauch ausgebildet ist.

14. Kombination nach Anspruch 13, **dadurch gekennzeichnet, dass** der Schlauch (11a, 11b) und das Flächenelement (6) miteinander verschweißt sind.

## Claims

1. Combination of a rolling cart (1), in particular a rolling container, and a curtain device for optionally covering an access opening (2) between two adjacent side posts (4a) of a rolling cart frame (4), with a surface element (6) as well as with connecting means (7, 8; 9, 10, 16) for detachably fastening the surface element (6) to the side posts (4a), wherein the connecting means (7, 8; 9, 10, 16) are designed as tensioning straps (7, 8; 9, 10, 16) connected to the surface element (6), each extending between the two side posts (4a),
**characterised in that**
each tensioning strap (7, 8; 9, 10, 16) is designed in two parts with a longitudinally flexible tensioning belt (7, 8) with two clamps (8), one at each end, and an essentially longitudinally stable tensioning belt (9, 10, 16) with one tensioning clamp (16).

2. Combination according to claim 1 **characterised in that** the respective clamping strap (7, 8; 9, 10, 16) is equipped with two clamps (8) at the ends.

3. Combination according to claim 2 **characterised in that** the clamps (8) are each fitted with a connected handle (9').

4. Combination according to claim 3 **characterised in that** the handle (9') is a strap flag (9') connected to the respective clamp (8).

5. Combination according to any one of claims 1 to 4 **characterised in** the respective tensioning strap (7, 8; 9, 10, 16) is at least partially guided and held in a tubing (11a, 11b) attached to the surface element (6).

6. Combination according to claim 5 **characterised in that** in the areas of the two end clamps (8) of the tensioning strap (7, 8; 9, 10, 16) and centrally the respective tubing (11a, 11b) is open, forming a free area (12), and is otherwise closed and therefore defines two partial tubings (11a, 11b).

7. Combination according to claim 6 **characterised in that** with its two ends, the longitudinally stable tensioning belt (9, 10, 16) adjoins and/or is connected to respective tubing ends on both sides of the central free area (12) of the tubing (11a, 11b).

8. Combination according to any one of claims 6 to 7 **characterised in that** the longitudinally stable tensioning belt (9, 10) is connected to the respective partial tubing (11a, 11b) and/or defines a stop on the respective partial tubing (11a, 11b).

9. Combination according to any one of claims 1 to 8 **characterised in that** the surface element (6) has a weight per unit area of less than 500 g/m².

10. Combination of any one of claims 1 to 9 **characterised in that** the surface element (6) is at least partially transparent.

11. Combination of at least one of claims 1 to 10 **characterised in that** the surface element (6) is designed as a net and in particular as a coated woven material.

12. Combination according to any one of claims 1 to 11 **characterised in that** the surface element (6) is designed with reinforcing elements (14), for example welded-on strips of plastic.

13. Combination according to any one of claims 5 to 12, if dependent on claim 5, **characterised in that** the tubing (11a, 11b) is designed as plastic tubing.

14. Combination according to claim 13 **characterised in that** the tubing (11a, 11b) and the surface element (6) are welded to each other.

## Revendications

1. Association d'un chariot (1), notamment d'un conteneur roulant et d'un système de rideau destiné à recouvrir sélectivement une ouverture d'accès (2) entre deux montants latéraux (4a) voisins d'un châssis de chariot (4), pourvu d'un élément plan (6), ainsi que de moyens d'assemblage (7, 8 ; 9, 10, 16) destinés à immobiliser de manière amovible l'élément plan (6) sur les montants latéraux (4a), les moyens d'assemblage (7, 8 ; 9, 10, 16) étant conçus sous la forme de courroies de serrage (7, 8 ; 9, 10, 16) raccordées sur l'élément plan (6), lesquelles s'étendent respectivement entre les deux montants latéraux (4a),
**caractérisée en ce que**
la courroie de serrage (7, 8 ; 9, 10, 16) respective est conçue en deux parties, avec une sangle de serrage (7, 8) flexible en longueur, pourvue de deux clips (8) placés respectivement du côté extrême et une sangle de serrage (9, 10, 16) sensiblement stable en longueur, pourvue d'une mâchoire de serrage (16).

2. Association selon la revendication 1, **caractérisée en ce que** la courroie de serrage (7, 8 ; 9, 10, 16) respective est équipée de deux clips (8) placés du côté extrême.

3. Association selon la revendication 2, **caractérisée en ce que** les clips (8) sont respectivement équipés d'une poignée (9') raccordée.

4. Association selon la revendication 3, **caractérisée en ce que** la poignée (9') est une patte de sangle (9') assemblée avec le clip (8) concerné.

5. Association selon l'une quelconque des revendications 1 à 4, **caractérisée en ce que** la courroie de serrage (7, 8 ; 9, 10, 16) respective est guidée et maintenue au moins partiellement dans un flexible (11a, 11b) raccordé sur l'élément plan (6).

6. Association selon la revendication 5, **caractérisée en ce que** le flexible (11a, 11b) est conçu dans la région des deux clips (8) placés du côté extrême de la courroie de serrage (7, 8 ; 9, 10, 16) et en étant ouvert au centre, en formant une zone libre (12) et en étant fermé par ailleurs et définit de ce fait deux flexibles partiels (11a, 11b).

7. Association selon la revendication 6, **caractérisée en ce que** par ses deux extrémités, la sangle de serrage (9, 10, 16) stable en longueur est adjacente à respectivement des extrémités de flexible de part et d'autre de la zone libre (12) centrale du flexible (11a, 11b) et/ou est raccordée sur celles-ci.

8. Association selon l'une quelconque des revendications 6 à 7, **caractérisée en ce que** la sangle de serrage (9, 10) stable en longueur est assemblée avec le flexible partiel (11a, 11b) respectif et/ou définit une butée sur le flexible partiel (11a, 11b) concerné.

9. Association selon l'une quelconque des revendications 1 à 8, **caractérisée en ce que** l'élément plan (6) présente un grammage inférieur à 500 g/m².

10. Association selon l'une quelconque des revendications 1 à 9, **caractérisée en ce que** l'élément plan (6) est conçu en étant au moins partiellement transparent.

11. Association selon l'une quelconque des revendications 1 à 10, **caractérisée en ce que** l'élément plan (6) est conçu sous la forme d'un filet et notamment d'un tissu revêtu.

12. Association selon l'une quelconque des revendications 1 à 11, **caractérisée en ce que** l'élément plan (6) est conçu avec des éléments de renfort (14), par exemple des bandes en matière plastique rapportés par soudage.

13. Association selon l'une quelconque des revendications 5 à 12, si elles dépendent de la revendication 5, **caractérisée en ce que** le flexible (11a, 11b) est conçu sous la forme d'un flexible en matière plastique.

14. Association selon la revendication 13, **caractérisée en ce que** le flexible (11a, 11b) et l'élément plan (6) sont soudés l'un à l'autre.
